(19) Europäisches Patentamt
European Patent Office
Office européen des brevets

(11) **EP 4 760 645 A1**

(12) **EUROPEAN PATENT APPLICATION**

(43) Date of publication:
**17.06.2026 Bulletin 2026/25**

(21) Application number: **24219188.0**

(22) Date of filing: **11.12.2024**

(51) International Patent Classification (IPC):
**G06V 10/25** (2022.01)    **G06N 3/02** (2006.01)
**G06V 10/44** (2022.01)    **G06V 10/764** (2022.01)
**G06V 10/82** (2022.01)    **G06V 10/98** (2022.01)
**G06V 20/00** (2022.01)    **G06V 10/776** (2022.01)

(52) Cooperative Patent Classification (CPC):
**G06V 10/25; G06N 3/02; G06N 3/045;
G06V 10/454; G06V 10/764; G06V 10/776;
G06V 10/82; G06V 20/00;** G06V 10/98; G06V 20/56

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Robert Bosch GmbH
70442 Stuttgart (DE)**

(72) Inventors:
• **Sakmann, Kaspar
70469 Stuttgart (DE)**
• **Metzen, Jan Hendrik
71034 Boeblingen (DE)**
• **Zhang, Dan
71229 Leonberg (DE)**

(54) **A DEVICE AND A COMPUTER IMPLEMENTED METHOD FOR DETERMINING AT LEAST ONE SLICE OF A SET OF DIGITAL IMAGES ON WHICH A MODEL FOR DETECTING AN OBJECT IN A DIGITAL IMAGE UNDERPERFORMS**

(57)    A device and a computer implemented method for determining at least one slice of a set of digital images on which a model for detecting an object in a digital image underperforms, wherein the method comprises providing (202) a set of digital images, wherein the set of digital images comprises digital images that are respectively annotated with a ground truth bounding box label, wherein the ground truth bounding box label comprises bounding box coordinates and a class label, wherein the method further comprises determining (204), for the digital images, a respective prediction of the model, wherein the prediction of the model comprises a predicted bounding box label, wherein the predicted bounding box label comprises predicted bounding box coordinates and a predicted class label, determining (206), for the predictions that are determined for the digital images a respective patch of the respective digital image depending on the respective prediction, wherein the respective patch is a false positive patch or a false negative patch or a true positive patch, determining (208), for the patches, a respective encoding of the respective patch with an image encoder of a vision language model, wherein the image encoder is configured to encode visual input of a resolution, wherein the encoding of the respective patch comprises an encoding of the respective patch, and wherein the encoding of the respective patch comprises an encoding of dense visual features determined for the respective patch, determining (210), for the encodings of the dense visual features, a respective upscaled embedding of the same resolution as the visual input, determining (212), for the patches, a respective feature vector depending on the pixels of the patch that are inside the ground truth bounding box defined in the label for the digital image for that the patch is determined, determining (214), for the patches, a respective embedding vector depending on the feature vector determined for the respective patch and the encoding of the respective patch, assigning (216), to the embedding vectors a first target value or a second target value respectively, wherein the first target value is assigned to the respective embedding vector in case the patch that the respective embedding vector is determined for is a false positive patch, wherein the second target value is assigned to the respective embedding vector otherwise, in particular in case the patch that the respective embedding vector is determined for is a false negative patch or a true positive patch, grouping (218) the digital images of the set of digital images into slices depending on the embedding vectors that are determined for the respective patch that is determined for the respective digital image and depending on the target values that are assigned to the respective embedding vector.

EP 4 760 645 A1

```
┌─────────────┐
│     202     │
└─────────────┘
       │
       ▼
┌─────────────┐
│     204     │
└─────────────┘
       │
       ▼
┌─────────────┐
│     206     │
└─────────────┘
       │
       ▼
┌─────────────┐
│     208     │
└─────────────┘
       │
       ▼
┌─────────────┐
│     210     │
└─────────────┘
       │
       ▼
┌─────────────┐
│     212     │
└─────────────┘
       │
       ▼
┌─────────────┐
│     214     │
└─────────────┘
       │
       ▼
┌─────────────┐
│     216     │
└─────────────┘
       │
       ▼
┌─────────────┐
│     218     │
└─────────────┘
       │
       ▼
┌─────────────┐
│     220     │
└─────────────┘
       │
       ▼
┌─────────────┐
│     222     │
└─────────────┘
```

Fig. 2

**Description**

Background

The invention relates to a device and a computer implemented method for determining at least one slice of a set of digital images on which a model for detecting an object in a digital image underperforms.

Machine learning models deployed in the real-world must be routinely audited to identify subsets of data on which the models underperform. These subsets are termed slices, the process is often done manually and requires a significant amount of time.

Disclosure of the invention

The computer implemented method according to independent claim 1 leverages the relationship between visual input and textual input to a vision language model in order to enable improvements in slice discovery. A low resolution of the dense visual features provided by the vision language model are upscaled to from the low resolution to the resolution of the visual input to resolve small objects.

The computer implemented method for determining at least one slice of a set of digital images on which a model for detecting an object in a digital image underperforms comprises providing a set of digital images, wherein the set of digital images comprises digital images that are respectively annotated with a ground truth bounding box label, wherein the ground truth bounding box label comprises bounding box coordinates and a class label, wherein the method further comprises determining, for the digital images, a respective prediction of the model, wherein the prediction of the model comprises a predicted bounding box label, wherein the predicted bounding box label comprises predicted bounding box coordinates and a predicted class label, determining, for the predictions that are determined for the digital images a respective patch of the respective digital image depending on the respective prediction, wherein the respective patch is a false positive patch or a false negative patch or a true positive patch, determining, for the patches, a respective encoding of the respective patch with an image encoder of a vision language model, wherein the image encoder is configured to encode visual input of a resolution, wherein the encoding of the respective patch comprises an encoding of the respective patch, and wherein the encoding of the respective patch comprises an encoding of dense visual features determined for the respective patch, determining, for the encodings of the dense visual features, a respective upscaled embedding of the same resolution as the visual input, determining, for the patches, a respective feature vector depending on the pixels of the patch that are inside the ground truth bounding box defined in the label for the digital image for that the patch is determined, determining, for the patches, a respective embedding vector depending on the feature vector determined for the respective patch and the encoding of the respective patch, assigning, to the embedding vectors a first target value or a second target value respectively, wherein the first target value is assigned to the respective embedding vector in case the patch that the respective embedding vector is determined for is a false positive patch, wherein the second target value is assigned to the respective embedding vector otherwise, in particular in case the patch that the respective embedding vector is determined for is a false negative patch or a true positive patch, grouping the digital images of the set of digital images into slices depending on the embedding vectors that are determined for the respective patch that is determined for the respective digital image and depending on the target values that are assigned to the respective embedding vector.

For determining a natural language description of at least one slice, the method comprises determining the natural language description of at least one slice depending on at least one feature vector that is determined for a patch that a digital image comprises that is grouped into the at least one slice.

Determining the natural language description may comprise determining a plurality of feature vectors for the patch that the digital image comprises, determining an average feature vector of the plurality of feature vectors, determining, with a text encoder of the vision language model an embedding vector of the natural language description, and selecting the natural language description depending on a similarity between the embedding vector and the average feature vector.

The method may comprise receiving at least one digital image of the set of digital images, wherein the digital image is be a video, a radar, a LiDAR, an ultrasound, a motion, or an infrared image.

In particular to mitigate using an output of the model, where the model underperforms, the method may comprise allowing to output at least one object that the model detects in at least one digital image that is outside of the at least one slice, or inhibiting to output at least one object that is detected in a digital image from the at least one slice.

In particular to use an output of the model, where the model underperforms, the method may comprise outputting the at least one slice of the set of digital images and/or the natural language description of the at least one slice.

The grouping may comprise assigning the target value to the embedding vector in an augmented vector, that comprises the embedding vector and the target value that is assigned to the embedding vector, and grouping the digital images depending on the augmented vector.

A device for determining at least one slice of a set of digital images on which a model for detecting an object in a digital image underperforms comprises at least one processor and at least one memory, wherein the at least one memory stores instructions that, when executed by the at least one processor, cause the device to execute the method.

A computer program for determining at least one slice of a set of digital images on which a model for detecting an object in a digital image underperforms, characterized in that the computer program comprises computer-readable instructions that, when executed by the computer, cause the computer to execute the method.

Further exemplary embodiments are derived from the following description and the drawing. In the drawing:

Fig. 1 schematically depicts a device for determining at least one slice of a set of digital images on which a model for detecting an object in a digital image underperforms,

Fig. 2 depicts a flow chart comprising steps of a method for determining at least one slice of the set of digital images on which the model for underperforms,

Fig. 3 depicts an exemplary digital image,

Fig. 4 depicts exemplary dense features for the exemplary digital image,

Fig. 5 depicts an exemplary encoding of the dense features.

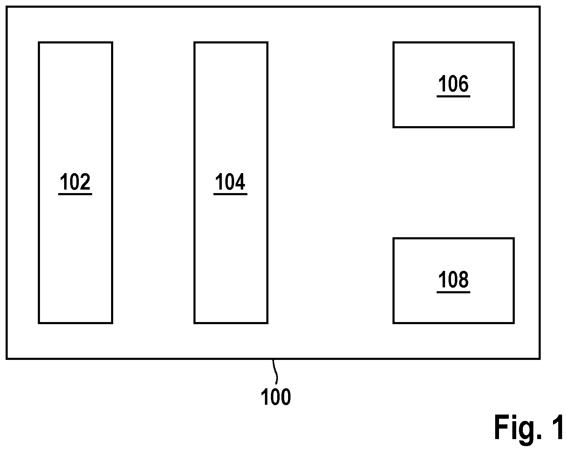

Figure 1 schematically depicts a device 100 for determining at least one slice of a set of digital images on which a model for detecting an object in a digital image underperforms.

The device 100 comprises at least one processor 102, and at least one memory 104. The at least one processor 102 is configured to execute instructions that, when executed by the at least one processor 102 cause the device 100 to execute a method for determining at least one slice of the set of digital images on which the model for detecting an object in a digital image underperforms. The at least one memory 104 is configured to store the instructions.

The device 100 may comprise an input 106 that is configured to receive at least one digital image of the set of digital images. The input 106 may be an interface for receiving the digital image or a camera for capturing the digital image.

The digital image may be a video, a radar, a LiDAR, an ultrasound, a motion, or an infrared image.

The device 100 may be configured to determine a natural language description of the at least one slice.

The device 100 may be configured to output at least one object that the model detects in a digital image. The device 100 may be configured to disregard at least one object that is detected in a digital image from the at least one slice.

The device 100 may be configured to output the at least one slice of the set of digital images and/or the natural language description of the at least one slice.

The device 100 may be configured to allow the output of at least one object detected in at least one digital image that is outside of the at least one slice of the set of digital images. The device 100 may be configured to inhibit the output of at least one object detected in at least one digital image that is in the at least one slice of the set of digital images.

The device 100 may comprise an output 108. The output 108 may be an interface for sending a digital image that is outside of the at least one slice or an object that is detected in a digital image that is outside of the at least one slice. The output 108 may be an interface for sending the natural language description of a slice in particular associated with at least one digital image that is inside the slice.

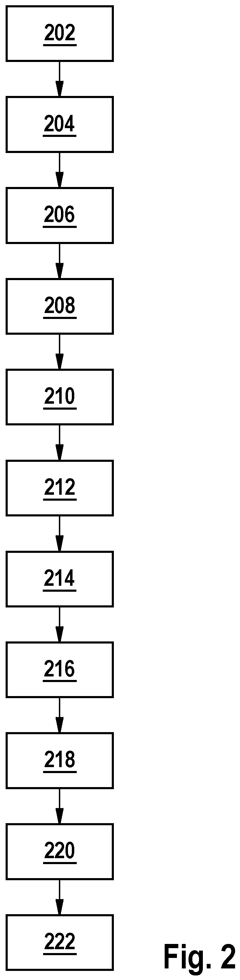

Figure 2 depicts a flow chart comprising steps of the method.

The method is based on a given model $f(x)$ for detecting an object in a digital image.

The model $f(x)$ is configured to determine a prediction y depending on visual input. The visual input in the example comprises a digital image $x \in [0,1]^{H \times W \times C}$, wherein $H$ defines the height of the digital image, $W$ defines the width of the digital image, and $C$ defines the dimension of the color channel. According to the example, the digital image $x$ comprises pixels, $H$ defines the number of rows of pixels in the digital image and $W$ defines the number of columns of pixels in the digital image. For a monocromatic digital image $C$ defines a single dimension, for an image according to the RGB color model, $C$ defines three dimensions of the color channel, red, green, blue.

The prediction $\hat{y}$ comprises a bounding box label. According to an example, the bounding box label $\hat{y}$ comprises four predicted bounding box coordinates $(\hat{x}_0, \hat{y}_0, \hat{x}_1, \hat{y}_1)$ and a predicted class label $\hat{c}$. The four predicted bounding box coordinates $(\hat{x}_0, \hat{y}_0, \hat{x}_1, \hat{y}_1)$ define a subset of pixels of the digital digital image $x$ that, according to the prediction $\hat{y}$ comprises the object. The predicted class label $\hat{c}$ defines the class of the object. According to an example, the model $f$ is configured to determine the predicted class label $\hat{c}$ from a set of $n_{c-1}$ given class labels $c_i$, $i \in (0,1,2, ...., n_{c-1})$ that the model $f$ is trained to detect.

The model $f$ may be configured to determine a confidence score $s_i \in [0,1]$ for the prediction $\hat{y}$. The confidence score $s_i$ for the prediction $\hat{y}$ indicates the confidence that the prediction $\hat{y}$ is correct.

The method is based on a given transformer based vision language model with a common embedding space for the vision input and for language input. An example for the transformer based vision language model is Contrastive Language-Image Pre-training, CLIP. CLIP is for example describe in Learning Transferable Visual Models From Natural Language Supervision (arXiv:2103.00020v1). The method is not restricted to working with a transformer based vision language model. The method may be based on another vision language model with a common embedding space for vision and language inputs.

The vision language model comprises an image encoder $E_{img}(.)$ and a text encoder $E_{text}(.)$. The vision language model is configured to output an encoding $I^{glob}$ of the visual input and an encoding $I^{dense}$ of dense visual features, where $I^{glob} \in \mathbb{R}^{1 \times p}$ and $I^{dense} \in \mathbb{R}^{h \times h \times p}$, and where $h$ and $p$ are parameters. Exemplary values are $h$ = 16, $p$ = 512. This means, the spatial resolution of the dense features is reduced by a factor of 14 compared to an exemplary input resolution for the visual input of 224x224 pixel. The method is not limited to the exemplary values of the parameters. The method is not limited to the exemplary input resolution.

For CLIP, the encoding $I^{glob}$ of the visual input is the "cls" token determined for the visual input and the encoding $I^{dense}$ of dense visual features is the CLIP embedding determined for the visual input.

The method comprises a step 202.

In the step 202, a set of digital images $D_{val}$ = ($X$, $Y$) = $\{(x_i, y_i)\}_{i=1,...,n_{gt}}$ is provided.

The set of digital images $D_{val}$ comprises $n_{gt}$ digital images $x_i \in [0,1]^{H \times W \times C}$ that are respectively annotated with a ground truth bounding box label $y_i$. According to the example, the ground truth bounding box label $y_i$ comprises four bounding box coordinates $(x_0, y_0, x_1, y_1)_i$ and a class label $c_i$.

The method is described by way of an example for a single class label $c$. The method is not limited to using the single class label $c$ and can be carried out for more than one class label, in particular for all class labels of the set of $n_{c-1}$ given class labels.

According to the example, the method comprises collecting the digital images $x_i$ from the set of digital images $D_{val}$ where $c_i = c$. According to the example, $n_{pred}$ digital images $x_i$ are collected from the set of digital images $D_{val}$ where $c_i = c$.

This means, the digital images digital images $x_i$ from the set of digital images $D_{val}$ are associated with the given class label $c$.

Instead of collecting the digital images, the method may comprise providing the set of digital images $D_{val}$ comprising only digital images $x_i$ associated with the given class label $c$.

This means, the method comprises providing digital images associated with the given class label $c$.

The method for example comprises receiving at least one digital image of the set of digital images.

The digital images are for example video, radar, LiDAR, ultrasound, motion, or infrared images.

The method comprises a step 204.

In the step 204, for the digital images $x_i$ that are associated with the given class label $c$, a respective prediction $\hat{y}_i$ of the model $f$ is determined.

For example, a set of $n_{pred}$ predictions $\hat{Y}$ = $\{\hat{y}_i\}_{i=1,...,n_{pred}}$ is determined. The set of predictions $\hat{Y}$ comprises, for the digital images $x_i$ that are associated with the given class label $c$, a respective prediction $\hat{y}_i$ of the

model $f$.

The method comprises a step 206.

In the step 206, for the predictions $\hat{y}_i$ that are determined for the digital images $x_i$ that are associated with the given class label $c$, a respective patch $w_i$ is determined depending on the respective prediction $\hat{y}_i$.

For example a set of $n_{tp}$ true positive patches

$$W_{tp} = \left\{ \left( w_j^{tp}, z_j^{tp} \right) \right\}_{j=1,...,n_{tp}}$$ is determined, wherein $w_j^{tp}$ represents the coordinates $(x_0, y_0, x_1, y_1)_j^{tp}$ of the true positive patch in the digital image $x_j$ for that the patch is determined, and wherein $z_j^{tp}$ represents the coordinates $(x_0, y_0, x_1, y_1)_j$ of the ground truth bounding box defined in the label $y_j$ for the digital image $x_j$ for that the patch is determined, relative to $w_j^{tp}$.

For example a set of $n_{fp}$ false positive patches

$$W_{fp} = \left\{ \left( w_j^{fp}, z_j^{fp} \right) \right\}_{j=1,...,n_{fp}}$$ is determined, wherein $w_j^{fp}$ represents the coordinates $(x_0, y_0, x_1, y_1)_j^{fp}$ of the false positive patch in the digital image $x_j$ for that the patch is determined, and wherein $z_j^{fp}$ represents the coordinates $(x_0, y_0, x_1, y_1)_j$ of the ground truth bounding box defined in the label $y_j$ for the digital image $x_j$ for that the patch is determined relative to $w_j^{fp}$.

For example a set of $n_{fn}$ false negative patches

$$W_{fn} = \left\{ \left( w_j^{fn}, z_j^{fn} \right) \right\}_{j=1,...,n_{fn}}$$ is determined, wherein $w_j^{fn}$ represents the coordinates $(x_0, y_0, x_1, y_1)_j^{fn}$ of the false negative patch in the digital image $x_j$ for that the patch is determined, and wherein $z_j^{fn}$ represents the coordinates $(x_0, y_0, x_1, y_1)_j$ of the ground truth bounding box defined in the label $y_j$ for the digital image $x_j$ for that the patch is determined relative to $w_j^{fn}$.

The patches $w_j$ in the set of true positive patches $W_{tp}$, the set of false positive patches $W_{fp}$, and the set of false negative patches $W_{fn}$ are determined to comprise the bounding box $\tilde{w}_j$ defined by the bounding box coordinates $(\hat{x}_0, \hat{y}_0, \hat{x}_1, \hat{y}_1)$ of the prediction $\hat{y}_j$ that the model $f$ outputs for the digital image $x_j$ for that the patch is determined:

$$\tilde{w}_j \subseteq w_j$$

The bounding box $\bar{w}_j$ is for example determined with the Hungarian method as described in Harold W. Kuhn, "The Hungarian Method for the assignment problem", Naval Research Logistics Quarterly, 2: 83-97, 1955.

Whether a patch $w_i$ is a false positive patch $\widetilde{w}_i^{fp}$, a false negative patch $\widetilde{w}_i^{fn}$, or a true positive patch $\widetilde{w}_i^{tp}$ is for example determined using intersection over union of the bounding box $\bar{w}_j$ according to the prediction $\hat{y}_j$ and the ground truth bounding box defined in the label $y_j$ for the digital image $x_j$ for that the patch is determined, as a score for distinguishing a true positive detection from a false detection.

For the model $f$ that is configured to output the confidence score $s_i$, the method may comprise filtering out a prediction $\hat{y}_i$ for that the confidence score $s_i$ is smaller than a threshold $s_{thr}$: $s_i < s_{thr}$.

At this point, the size of the patches may be arbitrary or the patches may have a size and resolution of the visual input of the vision language model.

A patch that has a different size or resolution than the visual input of the vision language model, may be processed to have the resolution of the visual input of the vision language model.

For example, the patch is scaled to the resolution of the visual input of the vision language model.

An example for the visual input is a rectangular patch, in particular a square patch, of a given resolution. The resolution for the square patch is for example 224x224 pixel, i.e., a square area with $H = W = 224$ pixel.

The method may comprise selecting the rectangular area of the given resolution of the digital image $x_j$ for that the patch is determined as the patch. The method may comprise selecting the square area of the given resolution, e.g., of 224x224 pixel, of the digital image $x_j$ for that the patch is determined as the patch.

The bounding box according to the prediction $\hat{y}_i$ or the ground truth bounding box may be larger than the visual input, e.g., larger than the rectangular area of the given resolution. The method may comprise selecting a rectangular area that is larger than the visual input, e.g. larger than the rectangular area of the given resolution, of the digital image $x_j$ for that the patch is determined. The method may comprise scaling down the larger area to the patch having the given resolution.

The bounding box according to the prediction $\hat{y}_i$ or the ground truth bounding box may be smaller than the visual input, e.g., smaller than the rectangular area of the given resolution. The method may comprise selecting a rectangular area that is smaller than the visual input, e.g. smaller than the rectangular area of the given resolution, of the digital image $x_j$ for that the patch is determined. The method may comprise scaling up the smaller area to the patch having the given resolution.

The method comprises a step 208.

In the step 208, for the patches $w_i$ a respective encoding $E_{img}(w_i) = I_i^{glob}, I_i^{dense}$ of the respective patch $w_i$ is determined with the image encoder $E_{img}(.)$ of the vision language model. The encoding comprises the encoding $I_i^{glob}$ of the patch $w_i$. For CLIP, the encoding $I^{glob}$ of the patch is the "cls" token determined for the patch $w_i$. The encoding comprises the encoding $I_i^{dense}$ of dense visual features determined for the patch $w_i$. For CLIP, the encoding $I_i^{dense}$ of dense visual features for the patch $w_i$ is the CLIP embedding of the of dense visual features determined for the patch $w_i$.

The method comprises a step 210.

In the step 210, for the encodings $I_i^{dense}$ of dense visual features, a respective upscaled embedding $I_i^{featup}$ of the same resolution as the visual input is determined. The upscaled embedding $I_i^{featup}$ of the same resolution as the visual input is determined using a FeatUp upscaler

$$FeatUp(\cdot,\cdot) \colon \mathbb{R}^{h \times h \times p} \times \mathbb{R}^{H \times H \times C} \to \mathbb{R}^{H \times H \times p}$$

as described in Fu et al., FeatUp: A Model-Agnostic Framework for Features at Any Resolution, ICLR 2024 (arXiv:2403.10516v2).

The FeatUp upscaler *FeatUp*$(\cdot,\cdot)$ is configured to map from the low spatial resolution embedding space for the encoding $I_i^{dense}$ of dense visual features into an embedding space of the same spatial dimension $H \times H$ as the visual input and as the patch $w_i$. The input patch $w_i$ is used as guidance for upsampling:

$$FeatUp\left(I_i^{dense}, w_i\right) = I_i^{featup} \in \mathbb{R}^{H \times H \times p}$$

The method comprises a step 212.

In the step 212, for the patches $w_i$, a respective feature vector $I_i^{obj}$ is determined. The feature vector $I_i^{obj}$ represents the pixels of the patch $w_i$ that are inside the ground truth bounding box defined in the label $y_i$ for the digital image $x_i$ for that the patch $w_i$ is determined. The feature vector $I_i^{obj}$ represents an object embedding of an object in the ground truth bounding box.

The feature vector $I_i^{obj}$ is for example determined from a binary mask

$$m = \mathrm{I}(inside\ z_i)$$

that associates the pixels of the patch $w_i$ that are inside the ground truth bounding box coordinates, represented

by $z_i$, with the binary value True, e.g., 1, and pixels of the patch $w_i$ outside the ground truth bounding box coordinates with the binary value False, e.g., 0. The feature vector $I_i^{obj} \in \mathbb{R}^{2p}$ is for example determined by averaging the feature vectors corresponding to pixels inside the ground truth bounding box

$$I_i^{obj} = \frac{1}{|\{k \in bbox\}|} \sum_{k \in bbox} m * I_i^{featup}$$

wherein *bbox* represents the ground truth bounding box and * the element-wise product of the matrix *m* with the encoding $I_i^{dense}$ of dense visual features.

The method comprises a step 214.

In the step 214, for the patches $w_i$, a respective embedding vector $I_i^{tot}$ is determined depending on the feature vector $I_i^{obj}$ determined for the respective patch $w_i$ and the encoding $I_i^{glob}$ of the respective patch $w_i$.

For example, the feature vector $I_i^{obj}$ determined for the respective patch $w_i$ is concatenated with the respective encoding $I_i^{glob}$ of the respective patch $w_i$ to yield the respective embedding vector

$$I_i^{tot} = \left[ I_i^{glob} | I_i^{obj} \right]$$

The method comprises a step 216.

In the step 216, for the embedding vectors $I_i^{tot}$, the respective embedding vector $I_i^{tot}$ is assigned a first target value, e.g., $t = 0$, in case the respective embedding vector $I_i^{tot}$ is determined for a patch $w_i$ that is a false positive patch $\widetilde{w}_i^{fp}$ and a second target value, e.g., $t = 1$, otherwise, e.g., in case the respective embedding vector $I_i^{tot}$ is determined for a patch $w_i$ that is a false negative patch $\widetilde{w}_i^{fn}$ or a true positive patch $\widetilde{w}_i^{tp}$.

The target value is assigned to the embedding vector $I_i^{tot}$ for example in an augmented vector, that comprises the embedding vector $I_i^{tot}$ and the target value that is assigned to the embedding vector $I_i^{tot}$. An exemplary augmented vector $v_k^{FP}$ for a false positive detection comprises the first target value, e.g.:

$$v_k^{FP} = \left( I_i^{tot}, 0 \right)$$

An exemplary augmented vector $v_k^{TP}$ for a true positive detection comprises the second target value, e.g.:

$$v_k^{TP} = \left( I_i^{tot}, 1 \right)$$

An exemplary augmented vector $v_k^{FN}$ for a false negative detection comprises the second target value, e.g.:

$$v_k^{FN} = \left( I_i^{tot}, 1 \right)$$

The method comprises a step 218.

In the step 218, the digital images $x_i$ of the set of digital images $D_{val}$ are grouped into slices depending on the embedding vectors $I_i^{tot}$ that are determined for the respective patch $w_i$ that is determined for the respective digital image $x_i$ and depending on the target values that are assigned to the respective embedding vector $I_i^{tot}$. The digital images $x_i$ are grouped for example into a predefined number *n* of slices.

The digital images $x_i$ are grouped for example into the slices depending on the augmented vectors.

For example, the augmented vectors are clustered into *n* clusters, wherein the clusters map to the slices one by one.

This yields coherent slices, i.e., slices that comprise digital images $x_i$ that share a common human-understandable trait.

For instance, in the context of autonomous driving a slice contains images of cars of a certain type, absent in the training set.

The digital images $x_i$ are grouped for example into the slices additionally depending on the confidence scores $s_i$.

The digital images $x_i$ are grouped for example into the slices with the Domino clustering algorithm. The Domino clustering algorithm is described for example in Eyuboglu et al., "Domino: Discovering Systematic Errors with Cross-Modal Embeddings", ICLR 2022, (arXiv:2183.14960v3).

The method comprises a step 220.

In the step 220, a natural language description of at least one slice is determined depending on at least one feature vector $I_i^{obj}$ that is determined for a patch $w_i$ that a digital image $x_i$ comprises that is grouped into the at least one slice.

The natural language description of at least one slice is determined for example as described in Domino: Discovering Systematic Errors with Cross-Modal Embeddings.

The method is not limited to determining the natural language description of the at least one slice as described in Domino: Discovering Systematic Errors with Cross-Modal Embeddings. A different slice description method may be used as well.

Determining the natural language description is described for an exemplary slice.

Determining the natural language description is described for the exemplary slice comprises averaging the feature vectors $I_i^{obj}$ that are determined for the patches $w_i$ that are grouped into the exemplary slice to yield an averaged feature vector.

Determining the natural language description for the exemplary slice comprises providing a phrase comprising a template for a property of an object and a template for the class of the object. An example for the phrase is "a <lighting> photo of a <class>", where lighting is the template for the property and <class> is the template for the class label.

Determining the natural language description for the exemplary slice comprises replacing the template for the property in the phrase with a property from a set of predetermined properties. An exemplary set of predetermined properties for the template <lighting> is "dark", "bright".

Determining the natural language description for the exemplary slice comprises replacing the template for the class in the phrase with one of the class labels $c_i$, $i \in (0,1,2, ...., n_{c-1})$. An exemplary set of class labels for the template <class> is "pedestrian", "car", "bike".

Replacing the templates in the phrase yields an instance of the phrase.

Determining the natural language description for the exemplary slice comprises, a plurality of instances of the phrase by replacing the template for the property with different values from the set of predetermined properties and/or by replacing the template for the class with different values from the set of class labels.

The instances are respectively mapped with the text encoder $E_{text}(.)$ to the embedding space to yield respective text embedding vectors.

Then the text embedding vector that is most similar to the average feature vector is determined and the instance of the phrase that is mapped to the text embedding vector that is most similar to the average feature vector is determined as the natural language description for the exemplary slice.

For example, a respective cosine similarity is determined between the average feature vector and the text embedding vectors that are determined for the instances respectively. The text embedding vector most similar to the average feature vector is for example determined depending on the cosine similarities between the average feature vector and the text embedding vectors that are determined for the instances.

The method may comprise a step 222.

The step 222 may comprise allowing to output at least one object that the model detects in at least one digital image that is outside of the at least one slice, or inhibiting to output at least one object that is detected in a digital image from the at least one slice.

The step 222 may comprise to output the at least one slice of the set of digital images and/or the natural language description of the at least one slice.

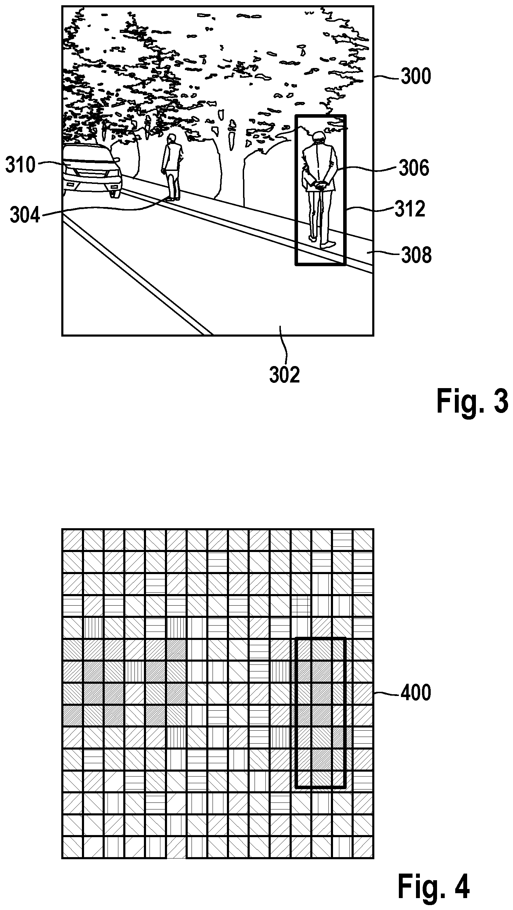

Figure 3 depicts an exemplary digital image 300.

The exemplary digital image 300 depicts a real world scenario captured in the real world, e.g. by a sensor that is mounted to a vehicle.

The exemplary digital image 300 depicts a road 302 and a first pedestrian 304 and a second pedestrian 306 on a walkway 308. A part of a vehicle 310 that is located on the road 302 next to the pedestrians 304, 306 is depicted in the exemplary picture 300 as well.

Figure 3 shows a bounding box 312 around the second pedestrian 306 as true positive detection of a pedestrian.

Figure 4 depicts the dense features 400 that the image encoder $E_{img}(.)$ outputs for the exemplary digital image 300. The dense features are of very low resolution.

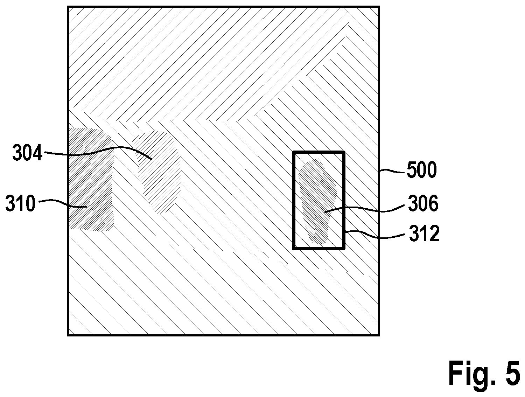

Figure 5 depicts the encoding $I_i^{featup}$ determined for the dense features 400 with the FeatUp upscaler $FeatUp(\cdot,\cdot)$. Figure 5 depicts the bounding box 312 around the upscaled features of the encoding $I_i^{featup}$ that represent the second pedestrian 306. According to the example, the upscaled features representing the first pedestrian 304 and the part of the vehicle 310 are recognizable in figure 5 as well.

**Claims**

1. A computer implemented method for determining at least one slice of a set of digital images on which a model for detecting an object in a digital image underperforms, **characterized in that** the method comprises providing (202) a set of digital images, wherein the set of digital images comprises digital images that are respectively annotated with a ground truth bounding box label, wherein the ground truth bounding box label comprises bounding box coordinates and a class label, wherein the method further comprises determining (204), for the digital images, a respective prediction of the model, wherein the prediction of the model comprises a predicted bounding box label, wherein the predicted bounding box label comprises predicted bounding box coordinates and a predicted class label, determining (206), for the predictions that are determined for the digital images a respective patch of the respective digital image depending on the respective prediction, wherein the respective patch is a false positive patch or a false negative patch or a true positive patch, determining (208), for the patches, a respective encoding of the respective patch with an image encoder of a vision language model, wherein the image encoder is configured to encode visual input of a resolution, wherein the encoding of the respective patch comprises an encoding of the respective patch, and wherein the encoding of the respective patch comprises an encoding of dense visual features determined for the respective patch, determining (210), for the encodings of the dense visual features, a respective upscaled embedding of the same resolution as the visual input, determining (212), for the patches, a respective feature vector depending on the pixels of the patch that are inside the ground truth bounding box defined in the label for the digital image for that the patch is determined, determining (214), for the patches, a respective embedding vector depending on the feature vector determined for the respective patch and the encoding of the respective patch, assigning (216), to the embedding vectors a first target value or a second target value respectively, wherein the first target value is assigned to the respective embedding vector in case the patch that the respective embedding vector is determined for is a false positive patch, wherein the second target value is assigned to the respective embedding vector otherwise, in particular in case the patch that the respective embedding vector is determined for is a false negative patch or a true positive patch, grouping (218) the digital images of the set of digital images into slices depending on the embedding vectors that are determined for the respective patch that is determined for the respective digital image and depending on the target values that are assigned to the respective embedding vector.

2. The method according to claim 1, **characterized in that** the method comprises determining (220), a natural language description of at least one slice depending on at least one feature vector that is determined for a patch that a digital image comprises that is grouped into the at least one slice.

3. The method according to claim 2, **characterized in** determining (220) the natural language description comprises determining a plurality of feature vectors for the patch that the digital image comprises, determining an average feature vector of the plurality of feature vectors, determining, with a text encoder of the vision language model an embedding vector of the natural language description, and selecting the natural language description depending on a similarity between the embedding vector and the average feature vector.

4. The method according to one of the preceding claims, **characterized in that** the method comprises receiving (202) at least one digital image of the set of digital images, wherein the digital image is be a video, a radar, a LiDAR, an ultrasound, a motion, or an infrared image.

5. The method according to one of the preceding claims, **characterized in that** the method comprises allowing (222) to output at least one object that the model detects in at least one digital image that is outside of the at least one slice, or inhibiting (222) to output at least one object that is detected in a digital image from the at least one slice.

6. The method according to one of the claims 1 to 4, **characterized in that** the method comprises outputting (222) the at least one slice of the set of digital images and/or the natural language description of the at least one slice.

7. The method according to one of the preceding claims, **characterized in that** grouping (218) comprises assigning the target value to the embedding vector in an augmented vector, that comprises the embedding vector and the target value that is assigned to the embedding vector, and grouping the digital images depending on the augmented vector.

8. A device (100) for determining at least one slice of a set of digital images on which a model for detecting an object in a digital image underperforms, **characterized in that** the device comprises at least one processor (102) and at least one memory (104), wherein the at least one memory (104) stores instructions that, when executed by the at least one processor (102), cause the device (100) to execute the method according to one of the claims 1 to 7.

9. A computer program for determining at least one slice of a set of digital images on which a model for detecting an object in a digital image underperforms, **characterized in that** the computer program comprises computer-readable instructions that, when executed by the computer, cause the computer to execute the method according to one of the claims 1 to 7.

**Fig. 1**

102  104  106  108  100

```
┌─────────┐
│   202   │
└─────────┘
     │
     ▼
┌─────────┐
│   204   │
└─────────┘
     │
     ▼
┌─────────┐
│   206   │
└─────────┘
     │
     ▼
┌─────────┐
│   208   │
└─────────┘
     │
     ▼
┌─────────┐
│   210   │
└─────────┘
     │
     ▼
┌─────────┐
│   212   │
└─────────┘
     │
     ▼
┌─────────┐
│   214   │
└─────────┘
     │
     ▼
┌─────────┐
│   216   │
└─────────┘
     │
     ▼
┌─────────┐
│   218   │
└─────────┘
     │
     ▼
┌─────────┐
│   220   │
└─────────┘
     │
     ▼
┌─────────┐
│   222   │
└─────────┘
```

**Fig. 2**

Fig. 3

Fig. 4

304
310
500
306
312

Fig. 5

Europäisches
Patentamt

European
Patent Office

Office européen
des brevets

# EUROPEAN SEARCH REPORT

**Application Number**

EP 24 21 9188

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Singh Jaisidh ET AL: "Automatic Discovery and Assessment of Interpretable Systematic Errors in Semantic Segmentation", arXiv.org, 16 November 2024 (2024-11-16), pages 1-13, XP093264019, Retrieved from the Internet: URL:https://arxiv.org/abs/2411.10845 [retrieved on 2025-03-26] * page 2 - page 10; figures 1-3 * ----- | 1-9 | INV. G06V10/25 G06N3/02 G06V10/44 G06V10/764 G06V10/82 G06V10/98 G06V20/00 G06V10/776 |
| A | Eyuboglu Sabri ET AL: "DOMINO: DISCOVERING SYSTEMATIC ERRORS WITH CROSS-MODAL EMBEDDINGS", , 11 April 2022 (2022-04-11), XP055967151, Retrieved from the Internet: URL:https://arxiv.org/pdf/2203.14960v2.pdf [retrieved on 2022-10-03] * sections 3-6; figures 1-3 * ----- | 1-9 | |

**TECHNICAL FIELDS SEARCHED (IPC)**

G06V
G06N

The present search report has been drawn up for all claims

| Place of search | Date of completion of the search | Examiner |
|---|---|---|
| The Hague | 31 March 2025 | Atmatzidis, Lazaros |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HAROLD W. KUHN**. The Hungarian Method for the assignment problem. *Naval Research Logistics Quarterly*, 1955, vol. 2, 83-97
- **FU et al.** FeatUp: A Model-Agnostic Framework for Features at Any Resolution. *arXiv:2403.10516v2*, 2024
- **EYUBOGLU et al.** Domino: Discovering Systematic Errors with Cross-Modal Embeddings. *arXiv:2183.14960v3*, 2022